# EUROPÄISCHE PATENTANMELDUNG

(11) **EP 0 638 603 A2**
(43) Veröffentlichungstag der Anmeldung: **15.02.1995**
(21) Anmeldenummer: 94112254.1
(22) Anmeldetag: 05.08.1994
(51) Int. Cl.: C08G 61/12

(54) **Verfahren zur Herstellung von Polyarylenetherketonen**

(30) Priorität: 10.08.1993 DE 4326774
(71) Anmelder: BASF Aktiengesellschaft, D-67063 Ludwigshafen (DE)
(72) Erfinder: Neufeld, Eckhard, D-67117 Limburgerhof (DE); Arnold-Mauer, Bärbel, Dr., D-67169 Kallstadt (DE); Hoffmann, Jürgen, D-67069 Ludwigshafen (DE); Heitz, Thomas, Dr., D-67125 Dannstadt-Schauernheim (DE); Sachsenweger, Christoph, Dr., D-67283 Obrigheim (DE); Wieland, Petra, D-67549 Worms (DE)

(57) **Zusammenfassung**

Zur Herstellung von Polyarylenetherketonen durch Friedel-Crafts-Polykondensation wird ein Reaktionsgemisch aus
A. einem Monomersystem,
B. einer Lewissäure,
C. gegebenenfalls einer Lewis-Base und
D. einem inerten Lösungsmittel
in zwei Reaktionszonen polykondensiert und in einer Pfropfenströmung aus der zweiten Reaktionszone ausgetragen und konfektioniert. Dabei wird das Reaktionsgemisch in der ersten Reaktionszone unter Rühren bis zu einer Viskosität von etwa 2000 mPa·s polykondensiert, in die zweite Reaktionszone überführt und aus dieser mittels eines inerten Lösungsmittels oder eines mit dem Lösungsmittel gesättigten Inertgases unter einem Druck von etwa 6 bis 65 bar, vorzugsweise 10 bis 25 bar ausgetragen, wobei der Förderdruck in wenigstens zwei Stufen reduziert wird und die Druckminderung in der ersten Stufe maximal 20 % beträgt.

## Beschreibung

Zur Darstellung der Erfindungs-Gattung ist im Oberbegriff des Anspruchs 1 von einem bekannten Verfahren im Sinne der DE-A-38 29 520 ausgegangen, nach dem Polyarylenetherketone durch elektrophile Polykondensation hergestellt werden, indem
A. ein Monomersystem aus
   (a) einem aromatischen Dicarbonsäurechlorid oder Phosgen und einer im wesentlichen äquimolaren Menge eines mehrkernigen Aromaten, der zwei durch elektrophile Substitution austauschbare Wasserstoffatome enthält,
   oder
   (b) einem mehrkernigen aromatischen Carbonsäurechlorid, das ein durch elektrophile Substitution austauschbares Wasserstoffatom besitzt und mit sich selbst kondensationsfähig ist,
   sowie
   (c) gegebenenfalls einem monofunktionellen Reagens zum Verschluß der Endgruppen,
B. eine Lewissäure in einer Menge von mindestens einem Mol pro nucleophile Gruppe im Reaktionsgemisch und zusätzlich einem kleinen Überschuß, der ausreichend ist, die Reaktion zu katalysieren,
C. gegebenenfalls eine Lewis-Base in einer Menge von 0,01 bis 4 Mol pro Mol an Säuregruppen und
D. ein unter Reaktionsbedingungen inertes Lösungsmittel
in Gegenwart eines Friedel-Crafts-Katalysators umgesetzt werden. Die Polykondensation wird in zwei Reaktionszonen durchgeführt, wobei das Mischen der flüssigen und festen Reaktionskomponenten und die Vorpolymerisation in der ersten Reaktionszone in einem Rührkessel erfolgt. Das Reaktionsgemisch wird mittels Gasdruck in und in einer Pfropfenströmung durch die zweite Reaktionszone gefördert, fertig polykondensiert, über ein Schneckenaggregat kontinuierlich ausgetragen und konfektioniert. Problematisch ist dabei jedoch der gleichmäßige Produktaustrag aus der zweiten Reaktionszone. Durch die Förderung mittels Gasdruck kann es an der Grenzfläche zur Gasphase zu einer Verarmung der Polymeroberfläche an Lösungsmittel kommen, d.h. die Polymeroberfläche trocknet aus. Dies führt zu einer zu großen Wandhaftung der Oberflächenschicht und die Oberfläche bildet sich zur Trombe aus, was in höchstem Maße unerwünscht ist, da sie ursächlich für Produktablagerungen ist. Strömungshindernisse im unteren Bereich der Reaktionszone sowie entsprechende Auskleidungen der Reaktionszone können dieses Phänomen nur bedingt vermeiden. Nicht befriedigend ist auch die Förderung des Polykondensats aus der zweiten Reaktionszone. Das hierfür vorgesehene Schneckenaggregat, dessen produktführende Teile mit einer Antihaftbeschichtung ausgerüstet sein müssen, da ansonsten das Reaktionsgemisch nicht förderbar ist, hat sich als sehr störanfällig erwiesen. Besonders problematisch ist das Anfahren des Schneckenaggregats, bei gefüllter Schnecke wegen der hohen Energiedissipation, die bei nicht-dekomplexiertem Polyarylenetherketon zu einer thermischen Schädigung des Produkts führen kann.

Mit der Erfindung soll ein Verfahren zur Herstellung von Polyarylenetherketonen geschaffen werden, welches von den geschilderten Mängeln frei ist und insbesondere die Förderung des Reaktionsgemisches ohne mechanische Austragshilfe ermöglicht.

Zur Lösung dieser Aufgabe werden die Maßnahmen nach dem Kennzeichen des Anspruchs 1 vorgeschlagen.

Für das erfindungsgemäße Verfahren zur Herstellung von Polyarylenetherketonen kommen solche Komponenten in Betracht, wie sie in der DE-A-38 29 520 beschrieben sind. Auch die Polykondensation erfolgt in der dort dargestellten Art und Weise.
A. Bevorzugte Monomer-Systeme A sind:
   a1) Terephthaloylchlorid und 4,4'-Diphenoxybenzophenon, was zu einem Polyaryletetherketon der Struktur 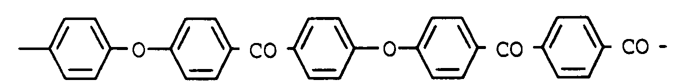 führt,
   a2) Terephthaloylchlorid und 4,4'-Diphenoxybenzol, welches zu 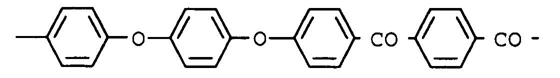 führt,
   a3) Terephthaloylchlorid und 1,4-Bis(phenoxybenzoyl)benzol, welches zu 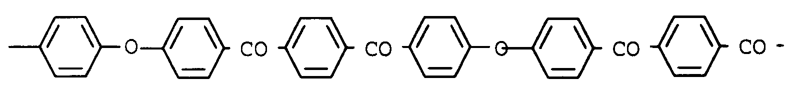 führt.
      Das aromatische Dicarbonsäurechlorid und der mehrkernige Aromat werden in im wesentlichen äquimolaren Mengen eingesetzt, wobei geringe Abweichungen zulässig sind, um eine gezielte Einstellung des Molekulargewichts zu bewirken.
   b) Die Polykondensation von p-Phenoxybenzoylchlorid mit sich selbst führt zu 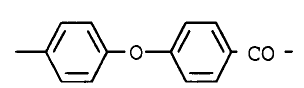
   c) Monofunktionelle Reagentien zum Kettenabbruch sind z.B. Benzoylchlorid und Phenoxybenzophenon.
      Sie sind insbesondere bei der Polykondensation der Monomeren b) für die gezielte Einstellung des Molekulargewichts wichtig; darüber hinaus dienen sie auch zur Stabilisierung der Polymeren in der Schmelze. Sie werden im allgemeinen in Mengen von 1 bis 10 Mol-%, bezogen auf die Monomeren a) bzw. b) eingesetzt.
B) Bevorzugte Lewis-Säure ist Aluminiumchlorid, daneben sind auch Aluminiumbromid, Antimonpentachlorid, Bortrifluorid, Zinkchlorid, Eisen-(III)-chlorid, Titantetrachlorid und Zinn-(II)-chlorid geeignet. Sie werden in einer Menge von mindestens einem Mol pro nucleophile Gruppe im Reaktionsgemisch eingesetzt, wobei ein geringer Überschuß anzuwenden ist, der ausreichend ist, die Polykondensationsreaktion zu katalysieren.
C) Das Reaktionsgemisch enthält vorzugsweise eine Lewis-Base, z.B. Alkalihalogenide, wie LiCl oder NaCl, ferner polare organische Verbindungen, wie N-Methylpyrrolidon, N,N-Dimethylformamid, 1-Methyl-2-pyrrolidon, Dimethylsulfon, Diphenylsulfon, Tetramethylensulfon (Sulfolan), Dimethylsulfid, Imidazol, Benzophenon und Trimethylamin. Bevorzugt sind LiCl und Dimethylsulfon. Sie werden in Mengen von 0,01 bis 4 Mol pro Mol an Säuregruppen eingesetzt.
D) Als inerte Lösungsmittel kommen in Frage: Methylenchlorid, o-Dichlorbenzol, 1,2,-Trichlorbenzol, 1,2-Dichlorethan, 1,1,2,2-Tetrachlorethan.

Die Polykondensation wird üblicherweise bei Temperaturen zwischen -70 und +150°C durchgeführt. Zweckmäßigerweise startet man sie in der ersten Reaktionszone bei tiefen Temperaturen, z.B. zwischen -50 und -10°C, und läßt dann die Temperatur auf z.B -30 bis +30°C ansteigen. Die gesamte Reaktion sollte zumindest unter leicht erhöhtem Druck, zweckmäßigerweise über 1,1 bar und insbesondere zwischen 2 und 10 bar, durchgeführt werden, um ein Entweichen des gebildeten Chlorwasserstoffs und damit ein Aufschäumen zu verhindern. Dies ist auch beim Übergang von der ersten in die zweite Reaktionszone zu beachten. Zur Überführung des Vorpolymerisats vom gerührten Vorreaktor in den Nachreaktor ist es zweckmäßig, daß im Vorreaktor ein höherer Druck eingestellt wird als im Nachreaktor. Es kann gegebenenfalls sinnvoll sein, während des Eintrags von Vorpolymerisat in den Nachreaktor den Druck in diesem etwas abzusenken. Der Druck sollte jedoch nicht soweit abgesenkt werden, daß die Reaktionsmasse aufschäumt.

Das Mischen der flüssigen und festen Reaktionskomponenten und die Vorpolymerisation erfolgt in der ersten Reaktionszone unter Rühren, zweckmäßigerweise in einem gekühlten Rührkessel, der vorteilhaft aus einer korrosionsbeständigen Legierung, z.B. Hastelloy, besteht. Der Anfangswert der Viskosität liegt bei etwa 0,5 mPa·s. Man polykondensiert in der ersten Reaktionszone solange, bis die Viskosität auf 20 bis 2000, vorzugsweise auf 50 bis 200 mPa·s angestiegen ist. Im Falle der Polykondensation von Terephthaloylchlorid mit Diphenoxybenzophenon dauert dies etwa 15 bis 25 min ab Zugabe des letzten Monomeren.

Das Vorpolymerisat wird dann unmittelbar in die zweite Reaktionszone eingetragen. Dies erfolgt durch Schwerkraft oder Inertgasdruck. Die Viskosität beim Überführen des Vorpolymerisates in den Nachreaktor sollte so hoch sein, daß im Nachreaktor das Aluminiumchlorid nicht sedimentieren kann, da sonst kein hochmolekulares Polyetherketon gebildet wird. Sie sollte jedoch noch ausreichend niedrig sein, um ein vollständiges Überführen des Vorpolymerisates in den Nachreaktor zu erlauben.

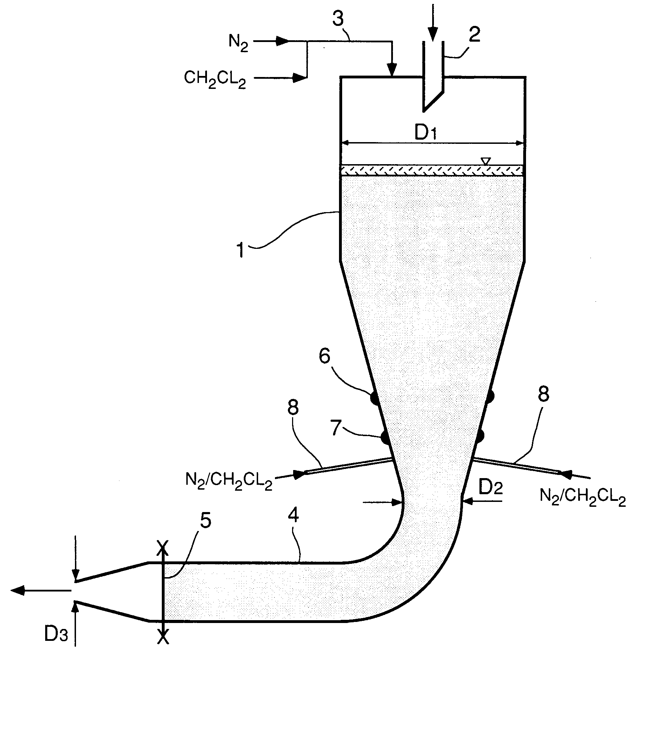

Die zweite Reaktionszone besteht aus einem Rohrreaktor, der über einen oder mehrere Rührkessel gespeist werden kann. Ein für das erfindungsgemäße Verfahren geeigneter Rohrreaktor ist in der Zeichnung schematisch dargestellt. Er umfaßt im wesentlichen einen vertikalen Rohrkörper (1) mit kreiszylindrischem Querschnitt, dessen innere Mantelfläche mit einem gegenüber dem Reaktionsgemisch inerten und antiadhäsivem Material, z.B. mit Polytetrafluorethylen, beschichtet bzw. ausgekleidet ist. Der Rohrkörper hat ein Höhen-Durchmesserverhältnis von 6 bis 15. Am Kopf des Rohrkörpers sind Zuführungen (2) und (3) für das Reaktionsgemisch sowie für ein Lösungsmittel und ein Inertgas bzw. Inertgas/Lösungsmittel-Gemisch zum Auspressen des Reaktionsgemisches vorgesehen. Das untere Ende des Rohrkörpers ist konusartig verjüngt, wobei sich Neigungswinkel < 45°, vorzugsweise Neigungswinkel von 5° bis 28° bewährt haben. Der Durchmesser D₂ ist vom Massenstrom des Reaktionsgemisches abhängig und beträgt im allgemeinen mehr als 50 mm. An den Konus schließt ein zweckmäßig rechtwinklig abgebogenes Auslaufrohr (4) an, welches an seinem freien Ende ebenfalls verjüngt ist und unmittelbar vor der Verjüngung ein Absperrorgan (5) aufweist. Mit (6,7) sind Einrichtungen für eine radioaktive Füllstandsmessung und mit (8) sind Anschlüsse für die Zufuhr eines weiteren Inertgasstromes, welcher im allgemeinen mit einem inerten Lösungsmittel gesättigt ist, bezeichnet.

Das in den Rohrreaktor eingebrachte Reaktionsgemisch kondensiert in diesem während einer Verweilzeit von etwa 4 h bis etwa 6 h vollständig aus. In die zweite Reaktionszone wird ferner ein inertes Lösungsmittel oder ein Inertgas, insbesondere Stickstoff, welches mit dem inerten Lösungsmittel gesättigt ist, eingeleitet und das nun gelartige Polyarylenetherketon unter der Einwirkung des Lösungsmittels und/oder des Inertgases aus dieser zweiten Reaktionszone in einer Pfropfenströmung ausgetragen. Der Lösungsmittel- bzw. Inertgasdruck beträgt dabei etwa 6 bis 65 bar, vorzugsweise 10 bis 25 bar. Während des Austragens des Polyarylenetherketons wird der Förderdruck in wenigstens zwei Stufen reduziert, wobei die Druckminderung in der ersten Stufe, d.h. bis zum Übergang des Konus in das Auslaufrohr maximal 60 %, vorzugsweise bis zu 20 %, beträgt. Hierzu genügt es im einfachsten Fall, das Verhältnis der Durchmesser D₁ und D₂ sowie für die weitere Druckstufe den Durchmesser D₃ entsprechend festzulegen. Insgesamt hat sich ein Durchmesserverhältnis D₁:D₂ zwischen 2:1 bis 20:1 als besonders günstig erwiesen. Das Polyarylenetherketon wird nachfolgend in einer Aufarbeitungseinheit, beispielsweise in einer Mühle konfektioniert.

Durch die Förderung des Polyarylenetherketons mit Hilfe eines inerten Lösungsmittels oder eines mit Lösungsmittel gesättigten Inertgases läßt sich die Trombenbildung gänzlich vermeiden und es verbleibt kein Produktrest in der zweiten Reaktionszone, der aufwendig entfernt werden müßte oder zu Verunreinigungen in nachfolgenden Produktchargen führt. Besonders hervorzuheben ist die gleichmäßige Produktqualität, insbesondere hinsichtlich des Polymerisationsgrades.

Eine besonders vorteilhafte Ausführungsform des erfindungsgemäßen Verfahrens sieht vor, daß das in die zweite Reaktionszone eingeleitete inerte Lösungsmittel in einer solchen Menge zudosiert wird, daß die Oberfläche des Reaktionsgemisches vollständig mit Lösungsmittel bedeckt ist und das Reaktionsgemisch mittels eines Inertgases unter einem Gasdruck von etwa 6 bis 65 bar, vorzugsweise 10 bis 25 bar, ausgetragen wird. Hierdurch lassen sich der apparative Aufwand für die Prozeßführung sowie entsprechende Sicherheitsvorkehrungen verringern.

Nach einem weiteren Merkmal der Erfindung wird in die zweite Reaktionszone ein Inertgas im Gegenstrom in das Reaktionsgemisch eingeleitet. Diese Zufuhr von Inertgas erfolgt unmittelbar nach der Überführung des Reaktionsgemisches aus der ersten Reaktionszone und bewirkt einen zusätzlichen Mischeffekt, so daß das Vorkondensat früher und mit wesentlich geringerer Viskosität, z.B. einer Viskosität von etwa 100 mPa·s, aus der ersten in die zweite Reaktionszone überführt werden kann sowie eine erhebliche Reduzierung des Katalysatorüberschusses. Im allgemeinen ist dabei das Inertgas mit dem bei der Reaktion der Komponenten in der ersten Reaktionszone verwendeten inerten Lösungsmittel gesättigt. Dazu wird das Inertgas durch ein Lösungsmittelbad bei entsprechendem Druck und einer der Temperatur des Reaktionsgemisches in der zweiten Reaktionszone zumindest angenäherten Temperatur geleitet. Das Inertgas nimmt dabei Lösungsmittel in einer seinem Sättigungsdampfdruck entsprechenden Menge auf.

Das Verfahren wird im folgenden Beispiel veranschaulicht:
In einem 20 l Druckgefäß wurden 3283 g (24,62 mol) Aluminiumchlorid in 5212 ml Methylenchlorid suspendiert und auf unter 0°C gekühlt. Unter Kühlung erfolgte nacheinander die Zugabe von 635,37 g (6,75 mol) Dimethylsulfon, 913,61 g (4,5 mol) Terephthaloylchlorid und 25,30 g (0,18 mol) Benzoylchlorid. Nach Kühlen auf < -10°C wurden noch 1681,85 g (4,59 mol) 4,4-Diphenoxybenzophenon zudosiert. Das Gefäß wurde gasdicht verschlossen und zur Druckhaltung ca. 10 bar Stickstoff aufgepreßt. Unter langsamer Erwärmung erhöhte sich die Viskosität des Reaktionsgemisches innerhalb von ca. 15 bis 20 min auf ca. 2000 mPa·s. Die Temperatur betrug dann ca. 20°C, das Volumen des Vorkondensats ca. 9000 ml. Durch den angelegten Stickstoffdruck konnte das Reaktionsgemisch innerhalb von 2 min durch das Bodenauslaßventil ausgetragen und in einen druckfesten, innen mit PTFE beschichteten Nachreaktor überführt werden.

Der Durchmesser D1 des Nachreaktors betrug 130 mm, die Länge des zylindrischen Teils 800 mm und der Winkel des Konus 10°. Der Auslauf des Nachreaktors hatte einen Durchmesser D2 von 50 mm. Vor der Mühle war das Auslaufrohr, das eine Länge von ca. 500 mm hat, mit einem Verjüngungswinkel von 10° auf einen Durchmesser D3 von 20 mm reduziert. Alle produktführenden Oberflächen des Nachreaktors waren mit PTFE beschichtet.

60 min nach der Überführung des Reaktionsgemisches in den Nachreaktor wurden 300 ml Methylenchlorid auf das Reaktionsgemisch aufgegeben. Der Nachreaktor wurde so betrieben, daß nach einer Verweilzeit von 5 h das gesamte Reaktionsgemisch innerhalb von 45 min mit Hilfe eines Inertgasstromes bei einem Druck von 10 bar über eine Mühle ausgetragen wurde. Die Temperatur im Nachreaktor betrug 25°C, der Druck nach der ersten Druckstufe ca. 9 bar. Die Aufarbeitung der ausgetragenen Reaktionsmasse erfolgte mit einer Hammermühle, wobei zur Hydrolyse des Polymer/Aluminiumchlorid-Komplexes 200 l/h Wasser eingedüst wurde. Bei einem Durchsatz von ca. 3,0 kg Polymer pro Stunde ergab sich eine Leistungsaufnahme der Mühle von 1,0 kW.

Das Polymer wurde dann durch mehrfache Extraktion mit Wasser von Katalysatorenresten befreit und unter Atmosphärendruck bei 290°C getrocknet.

Das erhaltene Polymer hatte eine inhärente Viskosität von 1,07 (gemessen in konzentrierter Schwefelsäure, 0,5/100 ml). Seine Schmelztemperatur betrug 375°C.

## Patentansprüche

1. Verfahren zur Herstellung von Polyarylenetherketonen durch Friedel-Crafts-Polykondensation, bei dem ein Reaktionsgemisch aus
A. einem Monomersystem aus
(a) einem aromatischen Dicarbonsäurechlorid oder Phosgen und einer im wesentlichen äquimolaren Menge eines mehrkernigen Aromaten, der zwei durch elektrophile Substitution austauschbare Wasserstoffatome enthält,
oder
(b) einem mehrkernigen aromatischen Carbonsäurechlorid, das ein durch elektrophile Substitution austauschbares Wasserstoffatom besitzt und mit sich selbst kondensationsfähig ist,
sowie
(c) gegebenenfalls einem monofunktionellen Reagens zum Verschluß der Endgruppen,
B. einer Lewissäure in einer Menge von mindestens einem Mol pro nucleophile Gruppe im Reaktionsgemisch und zusätzlich einem kleinen Überschuß, der ausreichend ist, die Reaktion zu katalysieren,
C. gegebenenfalls einer Lewis-Base in einer Menge von 0,01 bis 4 Mol pro Mol an Säuregruppen und
D. einem unter Reaktionsbedingungen inerten Lösungsmittel
in einer ersten Reaktionszone unter Rühren bis zu einer Viskosität von etwa 2000 mPa·s polykondensiert, in und durch eine zweite vertikale Reaktionszone gefördert, fertig polykondensiert und aus dieser in einer Pfropfenströmung ausgetragen wird, dadurch gekennzeichnet, daß nach der Überführung des Reaktionsgemisches in die zweite Reaktionszone in diese ein inertes Lösungsmittel oder ein mit dem inerten Lösungsmittel gesättigtes Inertgas eingeleitet und das Reaktionsgemisch durch das Lösungsmittel und/oder Inertgas unter einem Druck von etwa 6 bis 65 bar ausgetragen wird, wobei der Förderdruck in wenigstens zwei Stufen reduziert wird und die Druckminderung in der ersten Stufe maximal 60 % beträgt.

2. Verfahren nach Anspruch 1, dadurch gekennzeichnet, daß das in die zweite Reaktionszone eingeleitete inerte Lösungsmittel in einer solchen Menge zudosiert wird, daß die Oberfläche des Reaktionsgemisches vollständig mit Lösungsmittel bedeckt ist, und das Reaktionsgemisch mittels eines Inertgases unter einem Gasdruck von etwa 6 bis 65 bar ausgetragen wird.

3. Verfahren nach den Ansprüchen 1 und 2, dadurch gekennzeichnet, daß das Reaktionsgemisch unter einem Druck von 10 bis 25 bar durch die zweite Reaktionszone gefördert wird.

4. Verfahren nach den Ansprüchen 1 bis 3, dadurch gekennzeichnet, daß in die zweite Reaktionszone ein Inertgas im Gegenstrom in das Reaktionsgemisch eingeleitet wird.

5. Verfahren nach Anspruch 4, dadurch gekennzeichnet, daß das Inertgas mit dem im Anspruch 1 unter D angegebenen inerten Lösungsmittel gesättigt ist.
